Europäisches Patentamt

European Patent Office

Office européen des brevets

(19)

(11) Numéro de publication : **0 327 434 B1**

## FASCICULE DE BREVET EUROPEEN

(12)

(45) Date de publication du fascicule du brevet :
**15.01.92 Bulletin 92/03**

(51) Int. Cl.⁵ : **G01P 3/48**

(21) Numéro de dépôt : **89400231.0**

(22) Date de dépôt : **27.01.89**

(54) Palier ou roulement à capteur d'informations.

(30) Priorité : **02.02.88 FR 8801158**

(43) Date de publication de la demande :
**09.08.89 Bulletin 89/32**

(45) Mention de la délivrance du brevet :
**15.01.92 Bulletin 92/03**

(84) Etats contractants désignés :
**DE ES GB IT SE**

(56) Documents cités :
**EP-A- 0 081 225**
**EP-A- 0 213 732**
**DE-A- 2 907 797**
**FR-A- 2 599 794**
**GB-A- 2 081 903**
**US-A- 4 329 636**

(73) Titulaire : **S.N.R. ROULEMENTS**
**Boîte Postale 17 1, rue des Usines**
**F-74010 Annecy Cédex (FR)**

(72) Inventeur : **Peilloud, Fernand**
**Hery sur Alby**
**F-74540 Alby-sur-Cheran (FR)**
Inventeur : **Guers, Roger**
**23, Chemin des Amarantes**
**F-74600 Seynod (FR)**
Inventeur : **Godard, Georges**
**Poisy Chef-Lieu**
**F-74330 La Balme de Sillingy (FR)**

(74) Mandataire : **Ernst-Schonberg, Michel et al**
**REGIE NATIONALE DES USINES RENAULT (S.**
**0267) 8 & 10, avenue Emile Zola**
**F-92109 Boulogne Billancourt Cédex (FR)**

EP 0 327 434 B1

Jouve, 18, rue Saint-Denis, 75001 PARIS

## Description

L'invention concerne un palier ou roulement à capteur d'informations du type comportant un élément fixe portant au moins un dispositif capteur de champ magnétique et un élément tournant portant un anneau aimanté multipôles disposé coaxialement audit élément tournant qui se déplace devant le dispositif capteur, et dans lequel l'anneau est monte dans un support non magnétique porté par ledit élément tournant, et est séparé du dispositif capteur par un entrefer. Un tel palier a été décrit dans la publication FR-A-2599794.

La publication US-A-4329636 décrit un dispositif capteur dans lequel un arbre tournant est supporté par des paliers et est porté par un stator, tandis qu'un aimant multipôles à entailles porté par l'arbre se déplace devant un capteur fixe porté par le stator.

L'invention concerne plus particulièrement un procédé de réalisation de l'anneau aimanté avec une bonne précision d'aimantation. L'invention a également pour objet un roulement étanche à capteur d'informations qui fait application de l'anneau aimanté.

La demanderesse a constaté que la mesure précise de la vitesse de rotation notamment dans les montages d'application des paliers ou roulements à capteur de vitesse dans l'industrie automobile nécessite la réalisation de l'anneau aimanté avec des pôles successifs à pas constant avec une grande précision d'aimantation et une tolérance réduite à 1% environ.

Selon un aspect de l'invention l'anneau préalablement fixé sur son support tournant est soumis à une opération de fractionnement avant d'être traversé par un flux de force magnétique produit par un champ magnétique disposé coaxialement à l'axe de rotation de l'anneau dont les lignes de force sont de la sorte parallèles.

L'invention ainsi réalisée fournit de la sorte les moyens nécessaires à la réalisation de l'anneau aimanté avec la précision d'aimantation suffisante.

D'autres caractéristiques et avantages de l'invention ressortiront de la description qui suit en référence au dessin annexé dans lequel :

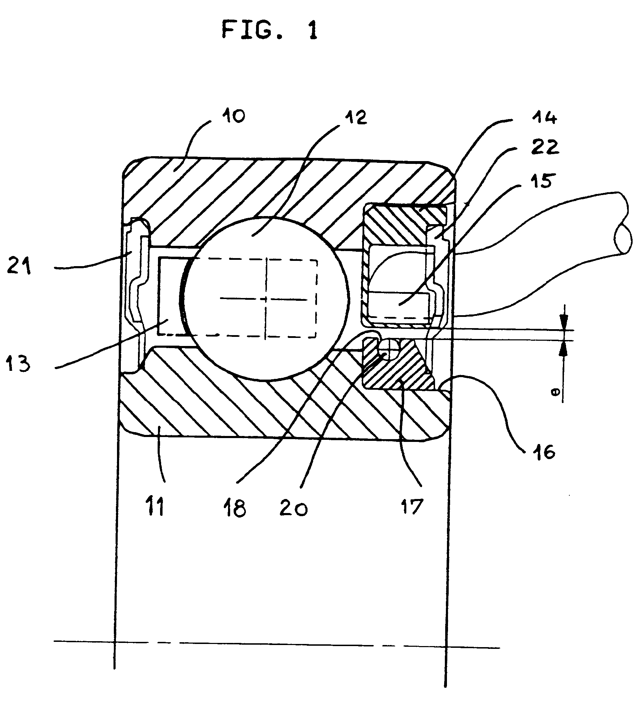

● la figure 1 est une vue en coupe axiale du roulement.

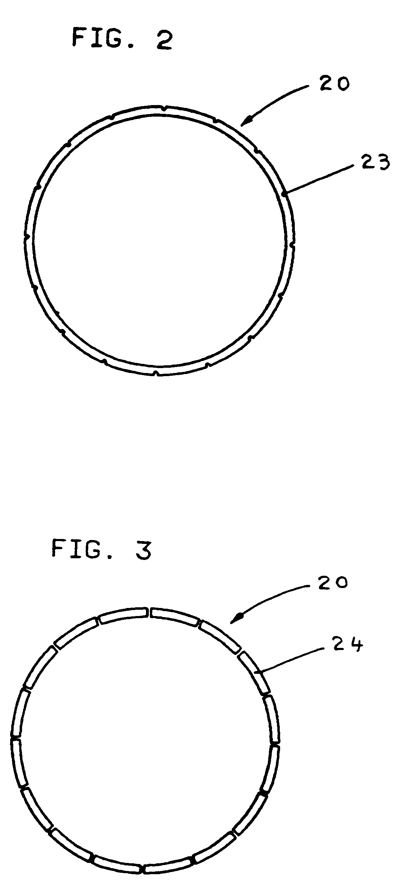

● les figures 2 et 3 sont des vues de face de deux exemples de réalisation de l'anneau, la réalisation à anneau sectionné est revendiquée.

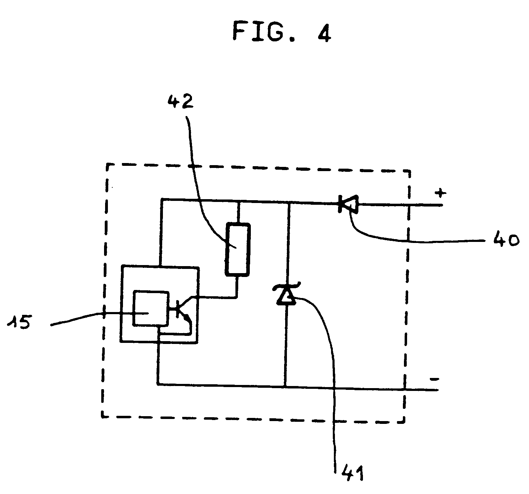

● la figure 4 représente le schéma du circuit de protection du capteur.

Selon la figure 1, le palier ou roulement à billes possède une bague extérieure 10 et une bague intérieure 11 susceptibles d'être au choix fixe ou tournante en fonction du montage utilisé.

Les bagues 10 et 11 possèdent des chemins de roulement pour des corps roulants 12 disposés dans une cage 13 qui en assure la retenue et le positionnement angulaire.

La bague extérieure 10 supposée fixe porte un joint d'étanchéité à lèvre radiale 21 en contact avec la bague intérieure 11 et un déflecteur 14 délimitant une cavité dans laquelle est fixé le capteur 15.

Un autre joint d'étanchéité 22 à lèvre radiale est retenu dans un lamage du déflecteur 14 et assure la traversée des fils de raccordement du capteur.

La bague intérieure 11 supposée tournante possède une portée de montage 16 d'une bague support 17 en matériau magnétique ou non immobilisée en rotation par collage, emmanchement à force ou par tout autre moyen.

La bague 17 possède une gorge 18 dont l'ouverture radiale est séparée du capteur 15 logé dans le déflecteur 14 par un entrefer e dont la dimension varie en fonction de la taille du roulement.

Un anneau aimanté 20 est logé dans la gorge 18. A titre d'exemple, l'anneau 20 peut être soit en alliage métallique traité, soit réalisé à base d'oxyde de fer et de liant plastique susceptible d'être moulé, usiné et aimanté radialement. L'anneau 20 peut selon le type d'aimantation être fixé directement sur la bague en acier 11 du roulement et forme avec l'élément porteur 17 une même pièce susceptible de produire des champs magnétiques suffisants pour le capteur fixe 15.

Dans le but d'améliorer la qualité de magnétisation de l'anneau 20 (longueur et valeur de champ égale pour chaque pôle), l'anneau 20 comporte des entailles 23 représentées à la figure 2 ou des tronçons 24 réalisés par sectionnement ainsi que cela est représenté à la figure 3. Dans ce cas, on procède au sectionnement de l'anneau 20 après sertissage ou inclusion de celui-ci dans son support 17.

La pratique des entailles ou des sections est avantageusement réalisée par une machine de découpage de précision qui permet l'obtention d'une polarité régulière avec une excellente précision.

A titre d'exemple, l'aimantation circulaire de l'anneau est obtenue après fractionnement de celui-ci par un flux magnétique produit par un champ disposé coaxialement à l'axe de rotation de l'aimant, par la technique de la magnétoscopie. Les entailles ou découpes génèrent dans ce cas des lignes de fuite où le champ magnétique est très intense sur une faible longueur.

Par la méthode d'aimantation circulaire, les pôles sectionnés fournissent un champ plus intense que les pôles entaillés. Il est possible d'exploiter cette différence pour avoir un repère fictif à chaque tour lorsqu'un capteur auxiliaire est positionné pour n'être sensible qu'à la plus grande intensité du champ si sur un anneau entaillé à chaque pôle un seul des pôles est sectionné.

Dans des conditions sévères d'application telles que rencontrées dans l'industrie automobile, on associe au capteur 15 un circuit de protection notamment contre les surtensions et les inversions de polarité et/ou une liaison deux fils ainsi que cela est schématisé à la figure 4.

Selon le schéma une diode Zener 41 assure la protection du capteur 15 contre les surtensions aux bornes + et – du circuit. Une diode 40 assure la protection contre les inversions de polarité aux mêmes bornes.

Une résistance 42 réalise une chute de la tension du signal d'émission du capteur.

Le schéma permet en outre de disposer de 4 niveaux distincts de tension de sortie :

— deux niveaux représentant le niveau bas ("0") et le niveau haut ("1") lors d'un fonctionnement normal

— un niveau zéro de la tension d'alimentation en cas de court circuit entre les conducteurs de sortie

— un niveau max de la tension d'alimentation en cas de coupure d'un conducteur de liaison de la résistance 42

Il est possible ainsi de surveiller le fonctionnement du capteur 15.

L'invention n'est nullement limitée au mode de réalisation décrit et représenté, donné à titre d'exemple. En particulier, elle englobe les moyens équivalents techniques des moyens décrits ou leurs combinaisons si celles-ci sont réalisées dans l'esprit de l'invention ou mises en oeuvre dans le cadre d'une prise d'information de la vitesse.

## Revendications

1. Palier ou roulement à capteur d'informations du type comportant un élément (10) fixe portant au moins un dispositif capteur (15) de champ magnétique et un élément (11) tournant portant un anneau (20) aimanté multipôles à entailles (23) circonférentiellement réparties qui est disposé coaxialement audit élément (11) tournant et se déplace devant le dispositif capteur (15) et dans lequel l'anneau (20) est monté dans un support (17) porté par ledit élément tournant et est séparé du dispositif capteur par un entrefer, caractérisé par le fait que l'un des pôles de l'anneau est sectionné.

2. Palier ou roulement selon la revendication 1 caractérisé par le fait que des moyens électroniques de protection sont disposés à proximité du capteur.

3. Procédé de réalisation de l'anneau multipôles selon la revendication 1 caractérisé par le fait que l'anneau (20) préalablement fixé sur un support tournant (17) est soumis à une opération de fractionnement aux tolérances imposées avant d'être traversé par un flux magnétique produit par un champ disposé coaxialement à l'axe de rotation de l'anneau.

## Patentansprüche

1. Lager mit Meßwertgeber, mit einem feststehenden Teil (10), das wenigstens einen Magnetfeldfühler (15) trägt, sowie mit einem sich drehenden Teil (11), das einen magnetisierten Ring (20) mit mehreren Polen trägt, der mit über seinen Umfang verteilten Einschnitten (23) versehen ist und der koaxial zum sich drehenden Teil (11) angeordnet ist und sich vor dem fühler (15) bewegt, wobei der Ring (20) in einer Halterung (17) angeordnet ist, die vom sich drehenden Teil getragen wird und die vom fühler durch einen Spalt getrennt ist, dadurch gekennzeichnet, daß einer der Pole des Ringes unterteilt ist.

2. Lager nach Anspruch 1, dadurch gekennzeichnet, daß in der Nähe des fühlers eine elektronische Schutzanordnung vorgesehen ist.

3. Verfahren zum Herstellen eines mit mehreren Polen versehenen Ringes nach Anspruch 1, dadurch gekennzeichnet, daß der vorher auf einer sich drehenden Halterung (17) befestigte Ring (20) einer Teilungs-Bearbeitung mit vorgegebenen Toleranzen unterzogen wird, bevor er dem Einfluß eines magnetischen Flusses unterzogen wird, der von einem Feld erzeugt wird, das koaxial zur Drehachse des Ringes verläuft.

## Claims

1. An information sensor journal or bearing of the type comprising a fixed member (10) bearing at least one magnetic field sensor device (15) and a rotary member (11) bearing a magnetized multipole ring (20) with notches (23) distributed peripherally which is disposed coaxially to the rotary member (11) and is displaced in front of the sensor device (15) and in which the ring (20) is mounted in a support (17) borne by the rotary member and is separated from the sensor device by an airgap, characterized in that the one of the poles of the ring is sectioned.

2. A journal or bearing as claimed in claim 1, characterized in that electronic protection means are disposed in the vicinity of the sensor.

3. A method for the production of the multipole ring as claimed in claim 1, characterized in that the ring (20) fixed in advance on a rotary support (17) is subject to a splitting operation at the required tolerances before being traversed by a magnetic flux produced by a field disposed coaxially to the axis of rotation of the ring.

FIG. 1

# FIG. 2

# FIG. 3

# FIG. 4